# EUROPEAN PATENT SPECIFICATION

(11) **EP 2 804 002 B1**
(45) Date of publication and mention of the grant of the patent: **25.09.2019**
(21) Application number: 13167874.0
(22) Date of filing: 15.05.2013
(51) Int. Cl.: G01N 35/00, G01N 35/02, G01N 35/04

(54) **Laboratory automated system with common sample buffer module**
Automatisiertes Laborsystem mit gemeinsamem Probensortierungmodul
Système automatisé de laboratoire ayant un module de routage d'échantillons commun

(43) Date of publication of application: 19.11.2014
(73) Proprietor: F. Hoffmann-La Roche AG, 4070 Basel (CH); Roche Diagnostics GmbH, 68305 Mannheim (DE)
(72) Inventor: Haechler, Joerg, 6317 Sattel (CH); Schindler, Florian, 6417 Sattel (CH); Spitadakis, Georgios, 6330 Cham (CH)
(74) Representative: Curcio, Mario

(56) References cited:
- EP-A1- 2 518 514
- JP-A- H0 792 171
- US-B1- 6 649 128
- US-B2- 8 423 174

## Description

### Field of the invention

The invention relates to a laboratory automated system comprising a sample workflow manager and to a method for processing sample tubes.

### Background

In analytical laboratories, in particular clinical laboratories, a multitude of analyses on biological samples are executed in order to determine physiological and biochemical states of patients, which states can be indicative of a disease, nutrition habits, drug effectiveness, organ function and the like.

Biological samples used in those analyses can be any number of different biological fluids such as blood and urine but are not limited thereto. These biological samples are often provided to the laboratories in sample tubes.

Modern clinical laboratories use networks of analytical devices to automatically process a large number of sample tubes per day and in particular to analyze a very large number of biological samples in a given hour. In order to meet this demand, such laboratories are equipped with high-throughput systems comprising a plurality of work cells connected by a conveyor line(s). Within such systems, sample tubes are automatically transported to different work cells via the conveyor line(s).

Sample tubes are normally loaded into the automated clinical systems as they arrive in the laboratory and test orders for each sample are registered. However, the rate at which the samples arrive can vary dramatically throughout the day. Furthermore, each different sample tube may be subjected to various different pre-analytical, analytical and post-analytical processing steps by one or more work cells according to a particular workflow, which depends on the particular type of sample and the specific test order. Sometimes tests need to be repeated and/or the sample tubes need to undergo another series of processing steps.

As the various work cells that are included in a particular automated system can process only a certain maximum number of samples per hour (throughput), and different work cells normally have different throughputs, a sample buffer is typically coupled to each work cell. A plurality of sample tubes are thus temporarily parked in each sample buffer in front of each work cell and sample tubes are processed by the respective work cell when the resources of the work cell become available. Such work cell sample buffers can also be employed to store processed sample tubes in case the samples need to be re-tested. In addition, or alternatively, sample tubes may be kept running on the conveyor line until the resources of a work cell are available and/or until a confirmation is received that a re-test is not required. Often, individual sample tubes have to be transported to different work cells to undergo different processing steps and/or different tests. This causes interdependencies between work cells.

Managing this complex workflow may be very challenging and, as the complexity of the system increases, workflow management becomes less efficient. This means that the full capacity of the system is not used and the throughput of the overall system is lower than the sum of the throughputs of the single work cells. Storing samples in front of each work cell and/or on a conveyor system has the effect of blocking the movement of sample tubes until the blockage can be removed. For example, if a sample tube is stored in a buffer coupled to a work cell and another work cell becomes available within the system to process that sample tube it may be the case that other sample tubes will have to be moved in order to extract the sample tube from the work cell, and if the conveyor is occupied with stored samples, the sample be will have to await a free location in the conveyor in order to be moved. These extra steps lead to increased complexity and increased time needed for a sample tube to be processed. For laboratories handling thousands of samples each day, the difference a small delay for each individual sample makes is substantial when viewed in terms of overall laboratory efficiency.

Document JPH0792171 discloses an analyser comprising work cells coupled as modules to a conveyor such that sample tubes are transported by the conveyor to the work cells, where the work cells have sample processing throughput. A sample buffer module is provided common to the work cells. A sample workflow manager dispatches the sample tubes from the sample buffer module to the work cells through the conveyor with frequency for each work cell, which is equal to the sample processing throughput of the work cell.

### Summary

A new laboratory automated system comprising a plurality of work cells coupled to a conveyor and a method for processing sample tubes are disclosed, both of which enable a system to maintain the maximum overall throughput regardless of the number and throughput of the individual work cells and regardless of the frequency at which sample tubes are loaded into the system. This is achieved by a sample buffer module coupled to the conveyor, the sample buffer module being in common to the plurality of work cells, and by a sample workflow manager as disclosed in the appended claims.

An advantage of particular disclosed embodiments is that is that the mechanical complexity of the system is reduced since individual sample buffers coupled to each work cells can be eliminated or reduced in size and complexity, thus resulting also in space and cost savings and reduced risk of mechanical failure and downtimes. An additional advantage of particular embodiments is that the conveyor is occupied only with those sample tubes to which a destination work cell has already been assigned and which are ready to be received by the work cell when they arrive. Furthermore, an additional advantage of particular embodiments is that sample tubes are more readily available to any work cell should a re-test be required. Another advantage of certain embodiments is that it is possible to manage the sample workflow without the need for detailed processing status information from the various work cells, thus simplifying software and electronic interfaces.

### Brief Description of the Drawings

FIG. 1 shows schematically an example of laboratory automated system for processing sample tubes.
FIG. 2 shows schematically an example of method for processing sample tubes.
FIG. 3 shows schematically a possible continuation of the method of FIG. 2.

### Description

A new laboratory automated system for processing sample tubes is described. The system comprises a conveyor and a plurality of work cells coupled as modules to the conveyor so that sample tubes can be transported by the conveyor to the work cells, wherein the work cells have respective sample processing throughputs.

A "laboratory automated system" is an instrument for the automated processing of samples for in vitro diagnostics. In general, the system may have different configurations according to the need and/or according to the desired laboratory workflow. Different configurations may be obtained by adding and/or removing and/or differently arranging modules, called "work cells", along the conveyor. The work cells may have dedicated functions and may be configured to cooperate with any one or more other work cells for carrying out dedicated tasks of a sample processing workflow, which may be a prerequisite before proceeding to another work-cell. Alternatively, work cells may work independently from each other, e.g. each carrying out a separate task, e.g. a different type of analysis on the same sample or different sample. A "work cell" is thus a sample processing module within a larger system wherein "sample processing" means performing a number of pre-analytical and/or analytical and/or post-analytical steps. Processing steps may comprise loading and/or unloading and/or transporting and/or storing sample tubes or racks comprising sample tubes, loading and/or unloading and/or transporting and/or storing reagent containers or cassettes, loading and/or unloading and/or transporting and/or storing and/or washing reagent vessels, e.g. cuvettes, loading and/or unloading and/or transporting and/or storing pipette tips or tip racks, reading and/or writing information bearing codes , e.g. barcodes or RFID tags, washing pipette tips or needles or reaction vessels, e.g. cuvettes, mixing paddles, mixing of samples with other liquid, e.g. reagents, solvents, diluents, buffers, decapping, recapping, pipetting, aliquoting, centrifuging, analyzing, detecting, evaluating results, etc...

In particular, a work cell may be an "analytical work cell" dedicated to the analysis of samples, i.e. qualitative and/or quantitative evaluation of samples for diagnostic purpose. An analytical work cell may comprise units for pipetting, dosing, mixing of samples and/or reagents. The analytical work cell may comprise a reagent holding unit for holding reagents to perform the analysis. Reagents may be arranged for example in the form of containers or cassettes containing individual reagents or group of reagents, placed in appropriate receptacles or positions within a storage compartment or conveyor. It may comprise a consumable feeding unit. In particular, it may comprise one or more liquid processing units, such as a pipetting unit, to deliver samples and/or reagents to the reaction vessels. The pipetting unit may comprise a reusable washable needle, e.g. a steel needle, or disposable pipette tips. The work cell may further comprise one or more mixing units, comprising e.g. a shaker to shake a cuvette or vessel comprising a liquid or a mixing paddle to mix liquids in a cuvette or reagent container. The analytical work cell may comprise a particular detection system and follow a particular workflow, e.g. execute a number of processing steps, which are optimized for certain types of analysis. Examples of such work cells are clinical chemistry analyzers, coagulation chemistry analyzers, immunochemistry analyzers, hematology analyzers, urine analyzers, nucleic acid analyzers, used to detect analytes present in the samples, to detect the result of chemical or biological reactions or to monitor the progress of chemical or biological reactions.

A work cell may be a "pre-analytical work cell" dedicated to prepare samples for analysis. For example a pre-analytical work cell may be configured to open (decap) a sample tube. It may also perform a transformation of the sample such as adding a solvent or material for diluting the sample and/or adding a reagent, in order to facilitate or enable analysis of the sample by an analytical work cell. Examples of operations performed by pre-analytical work cells include, but are not limited to: centrifugation, decapping, transportation, recapping, sorting, and aliquoting.

A work cell may be a "post-analytical work cell" dedicated to process sample tubes after analysis, e.g. for recapping sample tubes and/or for resorting sample tubes and/or for storing and/or disposing sample tubes after being processed by an analytical work cell.

According to certain embodiments the system comprises a plurality of work cells chosen from one or more pre-analytical work cells, one or more analytical work cells, and one or more post-analytical work cells.

According to certain embodiments, the system comprises at least one pre-analytical work cell, at least one analytical work cells and at least one post-analytical work cell.

According to certain embodiments, the system comprises at least two analytical work cells with different sample processing throughputs respectively.

A "conveyor" is a transportation device to which a plurality of work cells may be modularly coupled, e.g. added or removed and they may be itself configurable, e.g. extendable or rearrangeable, in order to adapt to different configurations of the work cells. The term "coupled" means that a connection is established between a work cell and the conveyor through which connection sample tubes may be exchanged, i.e. either enter or exit the work cell and be transported along the conveyor, e.g. to a different work cell. According to certain embodiments, the conveyor is a transportation device adapted to transport sample racks comprising a plurality of sample tubes and/or pucks comprising single sample tubes. According to one embodiment, the conveyor is a transportation pathway comprising one or more transportation lanes or paths, which may be independently controllable, and adapted to transport a plurality of sample tubes, e.g. on racks and/or pucks at the same time. The conveyor may comprise one or more transportation bands, one or more turntables and switches for changing direction and/or path of transportation, etc... According to certain embodiments the conveyor comprises a magnetic or electromagnetic controlling mechanism for transporting sample tubes along different paths. The conveyor may comprise however any type of sample tube moving device, including robotic gripping arms, moving carrier elements, etc...

A "sample tube" is either a sample collection test tube, also called "primary tube", which is used to receive a sample from a patient and to transport the sample contained therein to an analytical laboratory for diagnostics purposes, or a "secondary tube", which may be used to receive an aliquot of sample from a primary tube. A primary sample tube is typically made of glass or plastic, has a closed end and an open end that is typically closed by a cap. The cap may be of different materials and may assume different shapes, e.g. different diameters, and colors, typically associated with the type of tube, the type of sample in the tube, the type of conditions the sample is subjected to, and/or the type of process the tube and sample will follow. A secondary tube is typically made of plastic and may have a lower degree of variation of size and type with respect to primary tubes. In particular, secondary tubes may be smaller than primary tubes and be designed to be closed with one type or similar types of cap, e.g. of the screw type.

The term "sample", refers to a material suspected of containing an analyte of interest. The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The test sample can be pretreated prior to use, such as preparing plasma from blood, diluting viscous fluids, lysis or the like; methods of treatment can involve filtration, distillation, concentration, inactivation of interfering components, and the addition of reagents. A sample may be used directly as obtained from the source or following a pretreatment to modify the character of the sample, e.g. after being diluted with another solution or after having being mixed with reagents e.g. to carry out one or more diagnostic analyses like e.g. clinical chemistry assays, immunoassays, coagulation assays, nucleic acid testing, etc... The term "sample" is therefore not only used for the original sample but also relates to a sample which has already been processed (pipetted, diluted, mixed with reagents, enriched, having been purified, having been centrifuged, etc...). As used herein, the term "analyte" refers to the compound or composition to be detected or measured.

The system further comprises a sample buffer module coupled to the conveyor, the sample buffer module being in common to the plurality of work cells, wherein "plurality" means at least two work cells and not necessarily all work cells if the system comprises more than two work cells. A "sample buffer module" is a work cell whose primary function is to temporarily receive and store sample tubes before dispatching them to an assigned work cell. The sample buffer module may have other functions like resorting of sample tubes e.g. into different sample tube carriers, e.g. from a transportation rack for a plurality of sample tubes into a single sample tube carrier (puck) or vice versa and/or into a storage rack or vice versa, which may be adapted to receive a different number of sample tubes compared to a transportation rack. The sample buffer module may comprise a decapping and/or recapping unit to remove caps from sample tubes and/or to recap sample tubes. According to certain embodiments the sample buffer module temporarily receives and stores sample tubes, which have already been processed by an analytical work cell, for at least a predetermined time, during which time dispatch to the same or different analytical work cell may be requested for additional processing, e.g. a second analysis (re-testing).

In particular, the sample buffer module may be configured to accommodate a large number of sample tubes, e.g. hundreds of sample tubes in one or more sample tube holders, e.g. receiving trays or racks, which may be movable, e.g. rotatable or translatable on a two-dimensional area or in a three-dimensional space. According to one embodiment, the sample buffer module comprises a sample tube handling device, e.g. a gripper cooperating with a sample tube holder movement mechanism, which enables random access to any of the sample tubes in the sample buffer module.

Different work cells may have different respective sample processing throughputs. The term "sample processing throughput" refers to the number of samples per time unit, that a work cell is able to process, expressed e.g. in number of sample tubes per hour. "Processing" means performing any number of processing steps as above defined, for each sample according to a predefined protocol, which may vary for different samples and/or different types of analysis. Depending on the work cell a plurality of processing steps may be carried out in parallel or in sequence on the same or different samples.

The system further comprises a sample workflow manager. A "sample workflow manager" is a programmable logic controller running a computer-readable program provided with instructions to perform operations in accordance with a process operation plan. The sample workflow manager may comprise a scheduler, for executing a sequence of steps within a predefined cycle time. In particular, the sample workflow manager is configured to dispatch sample tubes from the sample buffer module to the work cells via the conveyor with a frequency for each work cell, which is equal to the sample processing throughput of each respective work cell. This means that the sample buffer module keeps dispatching as many sample tubes per hour to each assigned work cell as each respective work cell can process according to a process operation plan. The frequency at which sample tubes are dispatched to each work cell may thus be fixed for each work cell in common to the sample buffer module according to its respective throughput. As different samples and/or different analyses may require different processing, e.g. a different number of steps, and may require different processing times for the same work cell, an average processing time may be taken into account for defining the frequency of dispatch, which is equal to an average processing throughput of the work cell. In particular, the term "equal" is not intended to mean identical and fixing a frequency of dispatch slightly lower than the sample processing throughput of a work cell may be envisaged if a slight reduction of the overall throughput of the entire system is accepted. For example, dispatching sample tubes with a frequency, which is up to 10-15% lower than the sample processing throughput of a work cell, may be considered substantially equivalent.

According to certain embodiments, the sample workflow manager communicates with the work cells so as to take into account the actual processing status and/or requests of the work cells. According to certain embodiments the system further comprises work cell specific sample buffers coupled to one or more work cells such that a small number (for example, 5 or less, 10 or less, or 15 or less) sample tubes may be temporarily queued before the individual work cells before being processed. The sample workflow manager may in particular be configured to select one of a plurality of possible processing routes in order to avoid dependencies or conflicts between different work cells and maximize the processing throughput of the entire system. The sample workflow manager may for example determine the order of samples to be processed according to the type of analysis, urgency, etc... The sample workflow manager may thus be configured to dispatch a sample tube first to a work cell rather than another work cell if the same sample has to be processed by different work cells in order to avoid queuing, optimize workflow and maximize throughput. The sample workflow manager may also be configured to select different possible transportation routs of the conveyor in order to optimize parallel transportation to different work cells.

According to certain embodiments the system further comprises a loading module coupled to the conveyor for loading sample tubes into the system, wherein the sample workflow manager is configured to dispatch sample tubes from the loading module to the sample buffer module and from the sample buffer module to the work cells. The loading module may comprise a rack tray receiver for receiving rack trays comprising a plurality of sample racks comprising a plurality of sample tubes and/or slots for receiving individual sample racks or individual sample tubes e.g. on single tube carriers. Alternatively, the loading module can load sample tubes in bulk and subsequently place them onto sample tube holders, e.g. directly on the conveyor. The loading unit may have a compartment for STAT samples, i.e. samples with Short Turn Around Time, which have to be processed urgently and therefore have priority over other samples. This information may therefore be taken into account by the sample workflow manager. When determining the sequence with which sample tubes are dispatched.

According to certain embodiments the sample workflow manager is configured to dispatch sample tubes from the loading module directly to an assigned work cell if the frequency at which the work cell is served, at the time new sample tubes are loaded, is lower than its sample processing throughput and is configured to dispatch sample tubes from the loading module to the sample buffer module and from the sample buffer module to the work cell if the frequency at which the work cell is served, at the time new sample tubes are loaded, is equal to or greater than its sample processing throughput. The sample workflow manager may also or in alternative be configured to dispatch sample tubes from the loading module directly to an assigned work cell if the sample tubes are STAT samples tubes.

According to certain embodiments the system comprises an archiving module coupled to the conveyor for storing sample tubes processed by the work cells. In particular, the archiving module may comprise a refrigerated compartment for storing the sample tubes. An example of suitable archiving module is disclosed e.g. in US8423174B2.

According to certain embodiments the system comprises an unloading module coupled to the conveyor for unloading sample tubes from the system wherein the sample workflow manager is configured to dispatch sample tubes to the unloading module from any of the work cells, the sample buffer module or the archiving module. The unloading module may be similar to the loading module and according to certain embodiments the loading module and the unloading module are the same module.

According to the invention, the sample workflow manager is configured to dispatch processed sample tubes from the work cells to the common sample buffer module for at least a first predetermined time, during which time additional processing by the same or different work cell may be requested, and to dispatch the processed sample tubes from the sample buffer module to the archiving module or to the unloading module after the first predetermined time.

According to certain embodiments the sample workflow manager is configured to dispatch the sample tubes to the archiving module for a second predetermined time longer than the first predetermined time, during which time additional processing of the sample tubes may be requested, and to dispatch the sample tubes to the unloading unit or to waste after the second predetermined time. The first predetermined time may vary for different samples, it is however typically in the rage of a few minutes to a few hours, whereas the second predetermined time is typically in the range of a few days, also depending on the sample, e.g. from 2 to 10 days.

According to certain embodiments, if additional processing of a sample tube by a work cell is requested, the sample workflow manager is configured to dispatch sample tubes from the archiving module directly to the work cell if the frequency at which the work cell is served is lower than its sample processing throughput and is configured to dispatch sample tubes from the archiving module to the sample buffer module and from the sample buffer module to the work cell if the frequency at which the work cell is served is equal to or greater than its sample processing throughput.

When the sample buffer module comprises a sample tube handling device with random access to any of the sample tubes in the sample buffer module, the workflow manager may be configured to control the sample tube handling device so that sample tubes are dispatched from the sample buffer module in a sequence, which takes into account the throughput of each work cell and optionally the sample processing status of each work cell so that each work cell keeps working at the maximum respective throughput as long as sample tubes assigned to the respective work cell are available in the sample buffer module.

The sample workflow manager may be configured to manage the frequency at which sample tubes enter the sample buffer module and the frequency at which sample tubes leave the sample buffer module such that the sample buffer module keeps working at the maximum throughput and/or at a throughput which is the sum of the sample processing throughputs of the individual work cells in common to the sample buffer module.

A method for processing sample tubes is herein also described. The method comprises assigning sample tubes loaded into a system comprising a conveyor, a plurality of work cells for processing the sample tubes and a sample buffer module modularly coupled to the conveyor, to at least one of the plurality of the work cells, the work cells having respective sample processing throughputs, The methods further comprises the step of dispatching sample tubes loaded into the system to the sample buffer module and from the sample buffer module to the work cells via the conveyor with a frequency for each work cell, which is equal to the sample processing throughput of each respective work cell.

According to certain embodiments, the method comprises dispatching all sample tubes loaded into the system to the sample buffer module.

According to certain other embodiments, the method comprises dispatching sample tubes directly to at least one of the plurality of work cells and bypassing the sample buffer module if the frequency at which the work cell is served is lower than its sample processing throughput and dispatching sample tubes from the loading module to the sample buffer module and from the sample buffer module to the work cell if the frequency at which the work cell is served is equal to or greater than its sample processing throughput.

The method of the present invention comprises dispatching the sample tubes processed by the work cells from the work cells to the sample buffer module at least for a predetermined time, according to the disclosure of the appended claims.

Other and further objects, features and advantages will appear from the following examples and accompanying drawings, which illustrate exemplary embodiments and serve to explain the principles more in detail.

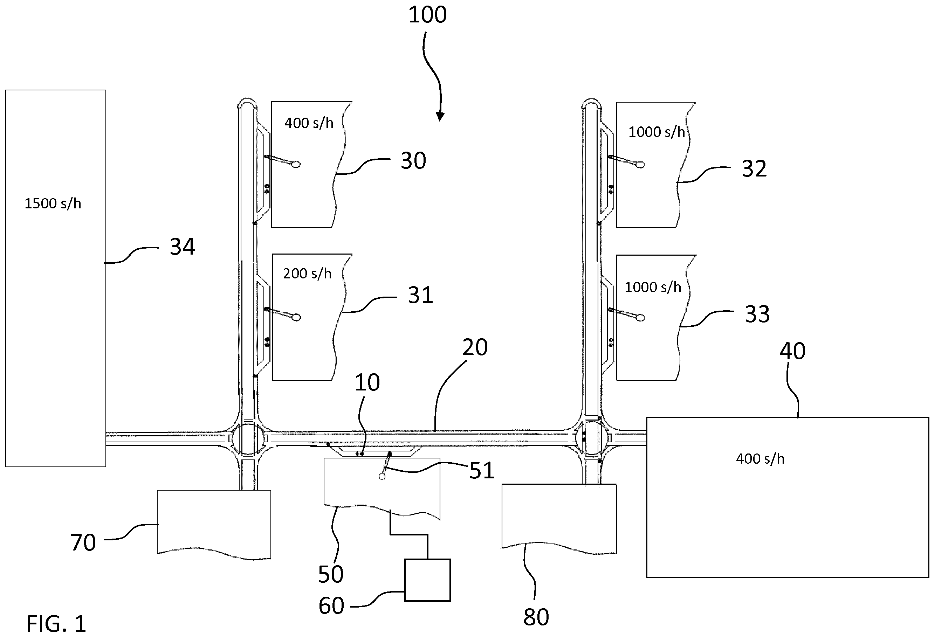

FIG. 1 shows schematically a laboratory automated system 100 for processing sample tubes 10. The system 100 comprises a conveyor 20 and a plurality of work cells 30, 31, 32, 33, 34, 35, 40 coupled as modules to the conveyor 20 so that sample tubes can be transported by the conveyor 20 to the work cells 30, 31, 32, 33, 34, 40. The conveyor 20 is a transportation device adapted to transport sample racks comprising a plurality of sample tubes and/or pucks comprising single sample tubes (not shown in detail). In particular, the conveyor 20 is embodied as a linear transportation pathway comprising a plurality of transportation paths, which are independently controllable, and is adapted to transport a plurality of sample tubes, e.g. on racks and/or pucks, at the same time and in different directions. The work cell 34 is a pre-analytical module comprising a plurality of sub modules each dedicated to a particular pre-analytical sample tube processing step, such as centrifuging, decapping, aliquoting, resorting, etc... The pre-analytical work cell 34 can process in total 1500 s/h (sample tubes/hour). The work cells 30, 31, 32, 33 are analytical work cells each configured for certain types of analysis, such as clinical chemistry, coagulation, immunochemistry, hematology, etc... The work cells 30, 31 have a sample processing throughput of 400 and 200 s/h (sample tubes/hour) respectively. The work cells 32, 33 have each a sample processing throughput of 1000 s/h (sample tubes/hour). The work cell 40 is a post-analytical work cell and in particular an archiving module for storing sample tubes 10 processed by the other work cells 30, 31, 32, 33, 34. The archiving module 40 has a sample processing throughput of 400 s/h (sample tubes/hour).

The system 100 further comprises a sample buffer module 50 coupled to the conveyor 20, the sample buffer module 50 being in common to the plurality of work cells, 30, 31, 32, 33, 34, 40.

The system 100 further comprises a sample workflow manager 60 configured to dispatch sample tubes 10 from the sample buffer module 50 to the work cells 30, 31, 32, 33, 34, 40 via the conveyor 20 with a frequency for each work cell 30, 31, 32, 33, 34, 40, which is equal to the sample processing throughput of each respective work cell 30, 31, 32, 33, 34, 40. Thus the workflow manager 60 is configured to dispatch sample tubes 10 from the sample buffer module 50 to the work cell 30 with a frequency of 200 sample tubes/hour, to the work cell 31 with a frequency of 400 sample tubes/hour, to the work cells 32, 33 with a frequency of 1000 sample tubes/hour each, to the archiving module 40 with a frequency of 400 sample tubes/hour, to the work cell 34 with a frequency of 1500 sample tubes/hour, as long as sample tubes assigned to the respective work cell 30, 31, 32, 33, 34, 40 are available in the sample buffer module 50.

The sample buffer module 50 comprises a sample tube handling device 51 with random access to any of the sample tubes in the sample buffer module 50 and the workflow manager 60 is configured to control the sample tube handling device 51 so that sample tubes 10 are dispatched from the sample buffer module 50 in a sequence, which takes into account the throughput of each work cell 30, 31, 32, 33, 34, 40 and optionally the sample processing status of each work cell 30, 31, 32, 33, 34, 40 so that each work cell keeps working at the maximum respective throughput as long as sample tubes assigned to the respective work cell 30, 31, 32, 33, 34, 40 are available in the sample buffer module 50.

The system 100 further comprises a loading module 70 coupled to the conveyor 20 for loading sample tubes 10 into the system 100 and the sample workflow manager 60 is configured to dispatch sample tubes from the loading module 70 to the sample buffer module 50 and from the sample buffer module 50 to the work cells 30, 31, 32, 33, 34, 40.

The sample workflow manager 60 can be configured to dispatch sample tubes from the loading module 70 directly to an assigned work cell 30, 31, 32, 33, 34, 40 if the frequency at which the work cell 30, 31, 32, 33, 34, 40 is served, at the time new sample tubes 10 are loaded, is lower than its sample processing throughput and is configured to dispatch sample tubes 10 from the loading module 70 to the sample buffer module 50 and from the sample buffer module to the work cell 30, 31, 32, 33, 34, 40 if the frequency at which the work cell 30, 31, 32, 33, 34, 40 is served is equal to or greater than its sample processing throughput. A sample tube 10 may follow a workflow path from work cell to work cell. For example, a sample tube 10 may be assigned first to the pre-analytical work cell 34, then to at least one of the analytical work cells 30, 31, 32, 33, and then to the archiving module 40. Once the sample tube 10 has been dispatched to the first assigned work cell, e.g. the pre-analytical work cell 34, it may proceed to the next assigned work cell, e.g. any of the work cells 30, 31, 32, 33 directly or via the sample buffer module 50. The system 100 further comprises an unloading module 80 coupled to the conveyor 20 for unloading sample tubes 10 from the system 100 wherein the sample workflow manager 60 is configured to dispatch sample tubes 10 to the unloading module 80 from any of the work cells 30, 31, 32, 33, 34, the sample buffer module 50 or the archiving module 40.

The sample workflow manager 60 is configured to dispatch processed sample tubes 10 from the work cells 30, 31, 32, 33, 34 to the common sample buffer module 50 for at least a first predetermined time, during which time additional processing by the same or different work cell 30, 31, 32, 33, 34 may be requested, and to dispatch the processed sample tubes 10 from the sample buffer module 50 to the archiving module 40 or to the unloading module 80 after the first predetermined time.

The sample workflow manager 60 can be further configured to dispatch the sample tubes 10 to the archiving module 50 for a second predetermined time longer than the first predetermined time, during which time additional processing of the sample tubes 10 may be requested, and to dispatch the sample tubes 10 to the unloading unit 80 or to waste after the second predetermined time.

The sample workflow manager 60 can be configured to dispatch sample tubes 10 from the archiving module 40 directly to a work cell 30, 31, 32, 33, 34, if additional processing of a sample tube 10 by the work cell 30, 31, 32, 33, 34 is requested and if the frequency at which the work cell 30, 31, 32, 33, 34 is served is lower than its sample processing throughput and can be configured to dispatch sample tubes 10 from the archiving module 40 to the sample buffer module 50 and from the sample buffer module 50 to the work cell 30, 31, 32, 33, 34 if the frequency at which the work cell 30, 31, 32, 33, 34 is served is equal to or greater than its sample processing throughput.

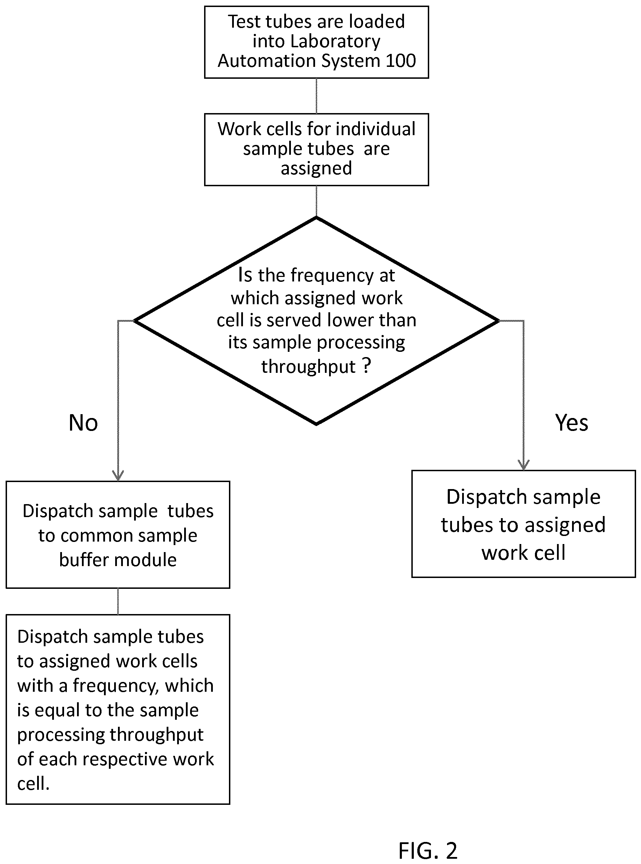

FIG. 2 depicts a possible method for processing sample tubes 10. The method comprises assigning sample tubes 10 loaded into the system 100 to at least one of the plurality of work cells 30, 31, 32, 33, 34, 40. The method further comprises dispatching sample tubes 10 loaded into the system 100 to the sample buffer module 50 and from the sample buffer module 50 to the work cells 30, 31, 32, 33, 34, 40 via the conveyor 20 with a frequency for each work cell 30, 31, 32, 33, 34, 40, which is equal to the sample processing throughput of each respective work cell 30, 31, 32, 33, 34, 40. In particular, the method comprises checking whether the frequency at which an assigned work cell 30, 31, 32, 33, 34, 40 is served is lower than its sample processing throughput. If the frequency at which an assigned work cell 30, 31, 32, 33, 34, 40 is served is lower than its sample processing throughput, the method comprises dispatching the sample tubes directly to the assigned work cell 30, 31, 32, 33, 34, 40. If the frequency at which an assigned work cell 30, 31, 32, 33, 34, 40 is served is equal to or greater than its sample processing throughput, the method comprises dispatching the sample tubes 10 to the sample buffer module 50 and from the sample buffer module 50 to the work cells 30, 31, 32, 33, 34, 40 via the conveyor 20 with a frequency for each work cell 30, 31, 32, 33, 34, 40, which is equal to the sample processing throughput of each respective work cell 30, 31, 32, 33, 34, 40.

The method may be adapted such that all sample tubes 10 loaded into the system 100 are dispatched to the sample buffer module 50 regardless of the frequency at which sample tubes 10 are loaded or at which an assigned work cell 30, 31, 32, 33, 34, 40 is served.

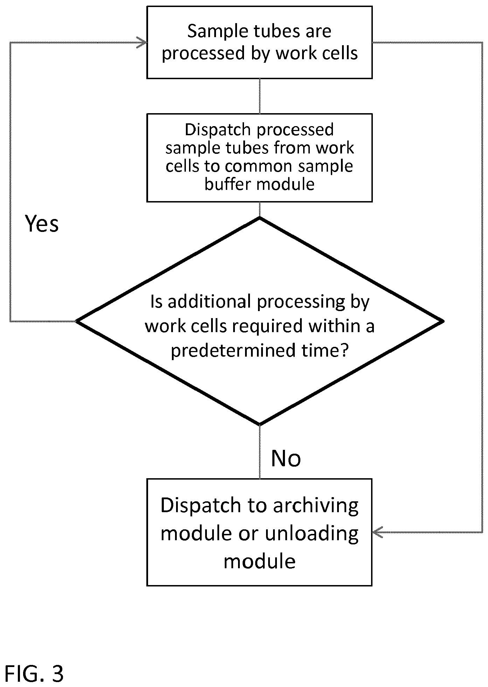

FIG. 3 depicts a method of further processing sample tubes 10 already processed by the work cells 30, 31, 32, 33, 34. The method comprises dispatching the sample tubes 10 processed by the work cells 30, 31, 32, 33, 34from the work cells 30, 31, 32, 33, 34to the sample buffer module 50 at least for a predetermined time. The method further comprises dispatching sample tubes 10 from the sample buffer module 50 to the same or different work cell 30, 31, 32, 33, 34if additional processing (re-testing) is required within the predetermined time. If no additional processing is required within the predetermined time, the method comprises dispatching the sample tubes 10 to the archiving module 40 for at least a second predetermined time or to the unloading module 80. The method may comprise dispatching the sample tubes 10 directly from a work cell 30, 31, 32, 33, 34, 40 to the archiving module 40 or to the unloading module 80 after additional processing.

Obviously many modifications and variations of the disclosed embodiments are possible in light of the above description. It is therefore to be understood, that within the scope of the appended claims, the invention may be practiced otherwise than as specifically devised in the above examples.

In particular, the number of work cells 30, 31, 32, 33, 34, 40 as well as their respective throughputs are only exemplary. It is also to be understood that dispatching sample tubes 10 to a plurality of work cells means dispatching sample tubes to at least two work cells and not necessarily to all work cells if the system comprises more than two work cells.

## Claims

1. Laboratory automated system (100) for processing sample tubes (10), the system (100) comprising
- a conveyor (20) and a plurality of work cells (30, 31, 32, 33, 34, 40) coupled as modules to the conveyor (20) so that sample tubes (10) can be transported by the conveyor (20) to the work cells (30, 31, 32, 33, 34, 40), wherein the work cells (30, 31, 32, 33, 34, 40) have respective sample processing throughputs,
- a sample buffer module (50) coupled to the conveyor (20), the sample buffer module (50) being in common to the plurality of work cells (30, 31, 32, 33, 34, 40),
- a sample workflow manager (60) configured to dispatch sample tubes (10) from the sample buffer module (50) to the work cells (30, 31, 32, 33, 34, 40) via the conveyor (20) with a frequency for each work cell (30, 31, 32, 33, 34, 40), which is equal to the sample processing throughput of each respective work cell (30, 31, 32, 33, 34, 40) **characterized in that**:
- at least one of the work cells (40) coupled to the conveyor (20) is an archiving module (40) for storing sample tubes processed by the other work cells (30, 31, 32, 33, 34) or an unloading module (80) coupled to the conveyor (20) for unloading sample tubes (10) from the system (100), and
- the sample workflow manager (60) is further configured to dispatch processed sample tubes (10) from the work cells (30, 31, 32, 33, 34) to the sample buffer module (50) for at least a first predetermined time, during which time additional processing by the same or different work cell (30, 31, 32, 33, 34) may be requested, and to dispatch the processed sample tubes (10) from the sample buffer module (50) to the archiving module (40) or to the unloading module (80) after said first predetermined time.

2. The system (100) according to claim 1 further comprising a loading module (70) coupled to the conveyor (20) for loading sample tubes (10) into the system (100) and wherein the sample workflow manager (60) is configured to dispatch sample tubes (10) from the loading module (70) to the sample buffer module (50) and from the sample buffer module (50) to the work cells (30, 31, 32, 33, 34, 40).

3. The system (100) according to claim 2 wherein the sample workflow manager (60) is configured to dispatch sample tubes (10) from the loading module (70) directly to an assigned work cell (30, 31, 32, 33, 34, 40) if the frequency at which said work cell (30, 31, 32, 33, 34, 40) is served, at the time new sample tubes (10) are loaded, is lower than its sample processing throughput and is configured to dispatch sample tubes (10) from the loading module (70) to the sample buffer module (50) and from the sample buffer module (50) to said work cell (30, 31, 32, 33, 34, 40) if the frequency at which said work cell (30, 31, 32, 33, 34, 40) is served, at the time new sample tubes (10) are loaded, is equal to or greater than its sample processing throughput.

4. The system (100) according to any of the preceding claims wherein the sample workflow manager (60) is configured to dispatch the sample tubes (10) to the archiving module (40) for a second predetermined time longer than the first predetermined time, during which time additional processing of the sample tubes (10) may be requested, and to dispatch the sample tubes (10) to the unloading unit (80) or to waste after said second predetermined time.

5. The system (100) according to claim 4 wherein, if additional processing of sample tubes (10) by a work cell (30, 31, 32, 33, 34) is requested, the sample workflow manager (60) is configured to dispatch the sample tubes (10) from the archiving module (40) directly to said work cell (30, 31, 32, 33, 34) if the frequency at which said work cell is served is lower than its sample processing throughput and is configured to dispatch sample tubes (10) from the archiving module (40) to the sample buffer module (50) and from the sample buffer module (50) to said work cell (30, 31, 32, 33, 34) if the frequency at which said work cell (30, 31, 32, 33, 34) is served is equal to or greater than its sample processing throughput.

6. The system (100) according to any of the preceding claims wherein at least two work cells (30, 31, 32, 33) are analytical modules with different sample processing throughputs respectively.

7. The system (100) according to any of the preceding claims wherein the conveyor (20) is a transportation device adapted to transport sample racks comprising a plurality of sample tubes (10) and/or pucks comprising single sample tubes (10).

8. The system (100) according to any of the preceding claims wherein the sample buffer module (50) comprises a sample tube handling device (51) with random access to any of the sample tubes (10) in the sample buffer module (50) and the workflow manager (60) is configured to control the sample tube handling device (51) so that sample tubes (10) are dispatched from the sample buffer module (50) in a sequence, which takes into account the throughput of each work cell (30, 31, 32, 33, 34, 40) and optionally the sample processing status of each work cell (30, 31, 32, 33, 34, 40) so that each work cell keeps working at the maximum respective throughput as long as sample tubes assigned to the respective work cell (30, 31, 32, 33, 34, 40) are available in the sample buffer module (50).

9. Method for processing sample tubes (10), the method comprising
- assigning sample tubes (10) loaded into a system (100) comprising a conveyor (20), a plurality of work cells (30, 31, 32, 33, 34, 40) for processing the sample tubes (10) and a sample buffer module (50) modularly coupled to the conveyor (20), to at least one of the plurality of the work cells (30, 31, 32, 33, 34, 40), the work cells (30, 31, 32, 33, 34, 40) having respective sample processing throughputs; wherein at least one of the work cells (40) is an archiving module for storing sample tubes processed by other work cells (30,31,32,33,34) or an unloading module (80) for unloading sample tubes from the system (100),
- dispatching sample tubes (10) loaded into the system (100) to the sample buffer module (50) and from the sample buffer module (50) to the work cells (30, 31, 32, 33, 34, 40) via the conveyor (20) with a frequency for each work cell (30, 31, 32, 33, 34, 40), which is equal to the sample processing throughput of each respective work cell (30, 31, 32, 33, 34, 40)
- dispatching processed sample tubes (10) from the work cells (30, 31, 32, 33, 34) to the sample buffer module (50) for at least a first predetermined time, during which time additional processing by the same or different work cell (30, 31, 32, 33, 34) may be requested, and
- dispatching the processed sample tubes (10) from the sample buffer module (50) to the archiving module (40) or to the unloading module (80) after said first predetermined time.

10. The method according to claim 9 comprising dispatching all sample tubes (10) loaded into the system (100) to the sample buffer module (50).

11. The method according to claim 9 comprising dispatching sample tubes (10) loaded into the system (100) directly to at least one of the plurality of work cells (30, 31, 32, 33, 34, 40) and bypassing the sample buffer module (50) if the frequency at which said work cell (30, 31, 32, 33, 34, 40) is served is lower than its sample processing throughput and dispatching sample tubes (10) to the sample buffer module and from the sample buffer module to said work cell if the frequency at which said work cell (30, 31, 32, 33, 34, 40) is served is equal to or greater than its sample processing throughput.

## Patentansprüche

1. Automatisiertes Laborsystem (100) zum Verarbeiten von Probenröhrchen (10), wobei das System (100) das Folgende umfasst
- eine Fördereinrichtung (20) und eine Vielzahl von Arbeitszellen (30, 31, 32, 33, 34, 40), die als Module an die Fördereinrichtung (20) gekoppelt sind, sodass die Probenröhrchen (10) von der Fördereinrichtung (20) zu den Arbeitszellen (30, 31, 32, 33, 34, 40) transportiert werden können, wobei die Arbeitszellen (30, 31, 32, 33, 34, 40) entsprechende Probenverarbeitungsdurchsätze haben,
- ein Probensortierungsmodul (50), das an die Fördereinrichtung (20) gekoppelt ist, wobei das Probensortierungsmodul (50) gemeinsam für die Vielzahl von Arbeitszellen (30, 31, 32, 33, 34, 40) vorgesehen ist,
- einen Proben-Arbeitsablauf-Manager (60), der konfiguriert ist, um Probenröhrchen (10) über die Fördereinrichtung (20) mit einer Häufigkeit für jede Arbeitszelle (30, 31, 32, 33, 34, 40), die dem Probenverarbeitungsdurchsatz der jeweiligen Arbeitszelle (30, 31, 32, 33, 34, 40) gleicht, aus dem Probensortierungsmodul (50) zu den Arbeitszellen (30, 31, 32, 33, 34, 40) zu schicken,
**dadurch gekennzeichnet, dass**:
- mindestens eine der Arbeitszellen (40), die an die Fördereinrichtung (20) gekoppelt sind, ein Archivierungsmodul (40) zum Lagern von Probenröhrchen, die von den anderen Arbeitszellen (30, 31, 32, 33, 34) verarbeitet wurden, oder ein Entlademodul (80), das zum Entladen von Probenröhrchen (10) aus dem System (100) an die Fördereinrichtung (20) gekoppelt ist, ist und
- der Proben-Arbeitsablauf-Manager (60) ferner konfiguriert ist, um verarbeitete Probenröhrchen (10) mindestens für eine erste vorbestimmte Zeit, während der eine zusätzliche Verarbeitung durch dieselbe oder eine andere Arbeitszelle (30, 31, 32, 33, 34) angefordert werden kann, aus den Arbeitszellen (30, 31, 32, 33, 34) zu dem Probensortierungsmodul (50) zu schicken und die verarbeiteten Probenröhrchen (10) nach der ersten vorbestimmten Zeit aus dem Probensortierungsmodul (50) zu dem Archivierungsmodul (40) oder zu dem Entlademodul (80) zu schicken.

2. System (100) nach Anspruch 1, das ferner ein Lademodul (70) umfasst, das zum Laden von Probenröhrchen (10) in das System (100) an die Fördereinrichtung (20) gekoppelt ist, und wobei der Proben-Arbeitsablauf-Manager (60) konfiguriert ist, um Probenröhrchen (10) aus dem Lademodul (70) zu dem Probensortierungsmodul (50) und aus dem Probensortierungsmodul (50) zu den Arbeitszellen (30, 31, 32, 33, 34, 40) zu schicken.

3. System (100) nach Anspruch 2, wobei der Proben-Arbeitsablauf-Manager (60) konfiguriert ist, um Probenröhrchen (10) aus dem Lademodul (70) direkt zu einer zugeordneten Arbeitszelle (30, 31, 32, 33, 34, 40) zu schicken, wenn die Häufigkeit, mit der die Arbeitszelle (30, 31, 32, 33, 34, 40) bedient wird, beim Laden neuer Probenröhrchen (10) geringer als ihr Probenverarbeitungsdurchsatz ist, und konfiguriert ist, um Probenröhrchen (10) aus dem Lademodul (70) zu dem Probensortierungsmodul (50) und aus dem Probensortierungsmodul (50) zu der Arbeitszelle (30, 31, 32, 33, 34, 40) zu schicken, wenn die Häufigkeit, mit der die Arbeitszelle (30, 31, 32, 33, 34, 40) bedient wird, beim Laden neuer Probenröhrchen (10) gleich oder höher als ihr Probenverarbeitungsdurchsatz ist.

4. System (100) nach einem der vorhergehenden Ansprüche, wobei der Proben-Arbeitsablauf-Manager (60) konfiguriert ist, um die Probenröhrchen (10) für eine zweite vorbestimmte Zeit, die länger ist als die erste vorbestimmte Zeit, wobei während dieser Zeit zusätzliche Verarbeitung der Probenröhrchen (10) angefordert werden kann, zu dem Archivierungsmodul (40) zu schicken und die Probenröhrchen (10) nach dieser zweiten vorbestimmten Zeit zu der Entladeeinheit (80) oder in den Abfall zu schicken.

5. System (100) nach Anspruch 4, wobei, wenn zusätzliche Verarbeitung von Probenröhrchen (10) durch eine Arbeitszelle (30, 31, 32, 33, 34) angefordert wird, der Proben-Arbeitsablauf-Manager (60) konfiguriert ist, um die Probenröhrchen (10) aus dem Archivierungsmodul (40) direkt zu der Arbeitszelle (30, 31, 32, 33, 34) zu schicken, wenn die Häufigkeit, mit der die Arbeitszelle bedient wird, geringer als ihr Probenverarbeitungsdurchsatz ist, und konfiguriert ist, um Probenröhrchen (10) aus dem Archivierungsmodul (40) zu dem Probensortierungsmodul (50) und aus dem Probensortierungsmodul (50) zu der Arbeitszelle (30, 31, 32, 33, 34) zu schicken, wenn die Häufigkeit, mit der die Arbeitszelle (30, 31, 32, 33, 34) bedient wird, gleich oder höher als ihr Probenverarbeitungsdurchsatz ist.

6. System (100) nach einem der vorhergehenden Ansprüche, wobei mindestens zwei Arbeitszellen (30, 31, 32, 33) Analysemodule mit jeweils verschiedenen Probenverarbeitungsdurchsätzen sind.

7. System (100) nach einem der vorhergehenden Ansprüche, wobei die Fördereinrichtung (20) eine Transportvorrichtung ist, die für den Transport von Probenracks, die eine Vielzahl von Probenröhrchen (10) umfassen, und/oder Pucks, die einzelne Probenröhrchen (10) umfassen, angepasst ist.

8. System (100) nach einem der vorhergehenden Ansprüche, wobei das Probensortierungsmodul (50) ein Probenröhrchen-Handhabungsgerät (51) mit direktem Zugriff auf eines der Probenröhrchen (10) in dem Probensortierungsmodul (50) umfasst und der Arbeitsablauf-Manager (60) konfiguriert ist, um das Probenröhrchen-Handhabungsgerät (51) zu steuern, sodass Probenröhrchen (10) in einer Reihenfolge, die den Durchsatz jeder Arbeitszelle (30, 31, 32, 33, 34, 40) und gegebenenfalls den Probenverarbeitungsstatus jeder Arbeitszelle (30, 31, 32, 33, 34, 40) berücksichtigt, aus dem Probensortierungsmodul (50) geschickt werden, sodass jede Arbeitszelle mit dem jeweils maximalen Durchsatz weiterarbeitet, solange Probenröhrchen, die der entsprechenden Arbeitszelle (30, 31, 32, 33, 34, 40) zugeordnet sind, in dem Probensortierungsmodul (50) verfügbar sind.

9. Verfahren zur Verarbeitung von Probenröhrchen (10), wobei das Verfahren das Folgende umfasst
- Zuordnen von Probenröhrchen (10), die in ein System (100) geladen wurden, das eine Fördereinrichtung (20), eine Vielzahl von Arbeitszellen (30, 31, 32, 33, 34, 40) zum Verarbeiten der Probenröhrchen (10) und ein Probensortierungsmodul (50), das modular an die Fördereinrichtung (20) gekoppelt ist, umfasst, zu mindestens einer der Vielzahl von Arbeitszellen (30, 31, 32, 33, 34, 40), wobei die Arbeitszellen (30, 31, 32, 33, 34, 40) entsprechende Probenverarbeitungsdurchsätze haben, wobei mindestens eine der Arbeitszellen (40) ein Archivierungsmodul zum Lagern von Probenröhrchen, die von anderen Arbeitszellen (30, 31, 32, 33, 34) verarbeitet wurden, oder ein Entlademodul (80) zum Entladen von Probenröhrchen aus dem System (100) ist,
- Schicken von Probenröhrchen (10), die in das System (100) geladen wurden, zu dem Probensortierungsmodul (50) und aus dem Probensortierungsmodul (50) zu den Arbeitszellen (30, 31, 32, 33, 34, 40) über die Fördereinrichtung (20) mit einer Häufigkeit für jede Arbeitszelle (30, 31, 32, 33, 34, 40), die dem Probenverarbeitungsdurchsatz für die entsprechende Arbeitszelle (30, 31, 32, 33, 34, 40) gleicht,
- Schicken verarbeiteter Probenröhrchen (10) aus den Arbeitszellen (30, 31, 32, 33, 34) zu dem Probensortierungsmodul (50) für mindestens eine erste vorbestimmte Zeit, wobei während dieser Zeit zusätzliche Verarbeitung durch dieselbe oder eine andere Arbeitszelle (30, 31, 32, 33, 34) angefordert werden kann, und
- Schicken der verarbeiteten Probenröhrchen (10) aus dem Probensortierungsmodul (50) zu dem Archivierungsmodul (40) oder zu dem Entlademodul (80) nach der ersten vorbestimmten Zeit.

10. Verfahren nach Anspruch 9, das das Schicken aller in das System (100) geladener Probenröhrchen (10) zu dem Probensortierungsmodul (50) umfasst.

11. Verfahren nach Anspruch 9, das das Schicken von Probenröhrchen (10), die in das System (100) geladen wurden, direkt zu mindestens einer von der Vielzahl von Arbeitszellen (30, 31, 32, 33, 34, 40) und das Umgehen des Probensortierungsmoduls (50), wenn die Häufigkeit, mit der die Arbeitszelle (30, 31, 32, 33, 34, 40) bedient wird, geringer als ihr Probenverarbeitungsdurchsatz ist, und das Schicken von Probenröhrchen (10) zu dem Probensortierungsmodul und aus dem Probensortierungsmodul zu der Arbeitszelle, wenn die Häufigkeit, mit der die Arbeitszelle (30, 31, 32, 33, 34, 40) bedient wird, gleich oder höher als ihr Probenverarbeitungsdurchsatz ist, umfasst.

## Revendications

1. Système (100) automatisé de laboratoire pour le traitement de tubes d'échantillons (10), le système (100) comprenant
- un transporteur (20) et une pluralité de cellules de travail (30, 31, 32, 33, 34, 40) accouplées au transporteur (20) en tant que modules de sorte que les tubes d'échantillons (10) peuvent être transportés par le transporteur (20) jusqu'aux cellules de travail (30, 31, 32, 33, 34, 40), dans lequel les cellules de travail (30, 31, 32, 33, 34, 40) ont des débits de traitement d'échantillons respectifs,
- un module de routage d'échantillons (50) accouplé au transporteur (20), le module de routage d'échantillons (50) étant commun à la pluralité de cellules de travail (30, 31, 32, 33, 34, 40),
- un gestionnaire (60) de flux de travaux d'échantillons configuré pour envoyer les tubes d'échantillons (10) du module de routage d'échantillons (50) aux cellules de travail (30, 31, 32, 33, 34, 40) par l'intermédiaire du transporteur (20), avec une fréquence pour chaque cellule de travail (30, 31, 32, 33, 34, 40) qui est égale au débit de traitement d'échantillons de chaque cellule de travail (30, 31, 32, 33, 34, 40) respective
**caractérisé en ce que** :
- au moins une des cellules de travail (40) accouplées au transporteur (20) est un module d'archivage (40) pour stocker les tubes d'échantillons traités par les autres cellules de travail (30, 31, 32, 33, 34) ou un module de déchargement (80) accouplé au transporteur (20) pour décharger les tubes d'échantillons (10) du système (100), et
- le gestionnaire (60) de flux de travaux d'échantillons est en outre configuré pour envoyer les tubes d'échantillons (10) traités des cellules de travail (30, 31, 32, 33, 34) au module de routage d'échantillons (50) pendant au moins une première durée prédéfinie, pendant laquelle un traitement supplémentaire par la même cellule de travail ou par une cellule de travail (30, 31, 32, 33, 34) différente peut être requis, et pour envoyer les tubes d'échantillons (10) traités du module de routage d'échantillons (50) au module d'archivage (40) ou au module de déchargement (80) après ladite première durée prédéfinie.

2. Système (100) selon la revendication 1 comprenant en outre un module de chargement (70) accouplé au transporteur (20) pour charger les tubes d'échantillons (10) dans le système (100) et dans lequel le gestionnaire (60) de flux de travaux d'échantillons est configuré pour envoyer les tubes d'échantillons (10) du module de chargement (70) au module de routage d'échantillons (50) et du module de routage d'échantillons (50) aux cellules de travail (30, 31, 32, 33, 34, 40).

3. Système (100) selon la revendication 2 dans lequel le gestionnaire (60) de flux de travaux d'échantillons est configuré pour envoyer les tubes d'échantillons (10) du module de chargement (70) directement à une cellule de travail (30, 31, 32, 33, 34, 40) attribuée si la fréquence à laquelle ladite cellule de travail (30, 31, 32, 33, 34, 40) est desservie, au moment où de nouveaux tubes d'échantillons (10) sont chargés, est inférieure à son débit de traitement d'échantillons et est configuré pour envoyer les tubes d'échantillons (10) du module de chargement (70) au module de routage d'échantillons (50) et du module de routage d'échantillons (50) à ladite cellule de travail (30, 31, 32, 33, 34, 40) si la fréquence à laquelle ladite cellule de travail (30, 31, 32, 33, 34, 40) est desservie, au moment où de nouveaux tubes d'échantillons (10) sont chargés, est supérieure ou égale à son débit de traitement d'échantillons.

4. Système (100) selon l'une quelconque des revendications précédentes dans lequel le gestionnaire (60) de flux de travaux d'échantillons est configuré pour envoyer les tubes d'échantillons (10) au module d'archivage (40) pendant une seconde durée prédéfinie supérieure à la première durée prédéfinie, pendant laquelle un traitement supplémentaire des tubes d'échantillons (10) peut être requis, et pour envoyer les tubes d'échantillons (10) à l'unité de déchargement (80) ou à la poubelle après ladite seconde durée prédéfinie.

5. Système (100) selon la revendication 4, dans lequel, si un traitement supplémentaire des tubes d'échantillons (10) par une cellule de travail (30, 31, 32, 33, 34) est requis, le gestionnaire (60) de flux de travaux d'échantillons est configuré pour envoyer les tubes d'échantillons (10) du module d'archivage (40) directement à ladite cellule de travail (30, 31, 32, 33, 34) si la fréquence à laquelle ladite cellule de travail est desservie est inférieure à son débit de traitement d'échantillons et est configuré pour envoyer les tubes d'échantillons (10) du module d'archivage (40) au module de routage d'échantillons (50) et du module de routage d'échantillons (50) à ladite cellule de travail (30, 31, 32, 33, 34) si la fréquence à laquelle ladite cellule de travail (30, 31, 32, 33, 34) est desservie est supérieure ou égale à son débit de traitement d'échantillons.

6. Système (100) selon l'une quelconque des revendications précédentes dans lequel au moins deux cellules de travail (30, 31, 32, 33) sont des modules analytiques ayant des débits de traitement d'échantillons respectivement différents.

7. Système (100) selon l'une quelconque des revendications précédentes dans lequel le transporteur (20) est un dispositif de transport conçu pour transporter des portoirs d'échantillons comprenant une pluralité de tubes d'échantillons (10) et/ou des disques comprenant des tubes d'échantillons (10) uniques.

8. Système (100) selon l'une quelconque des revendications précédentes dans lequel le module de routage d'échantillons (50) comprend un dispositif (51) de manipulation de tubes d'échantillons ayant un accès aléatoire à l'un quelconque des tubes d'échantillons (10) dans le module de routage d'échantillons (50) et le gestionnaire (60) de flux de travaux est configuré pour commander le dispositif (51) de manipulation de tubes d'échantillons de sorte que les tubes d'échantillons (10) sont envoyés à partir du module de routage d'échantillons (50) selon une séquence, qui tient compte du débit de chaque cellule de travail (30, 31, 32, 33, 34, 40) et éventuellement de l'état de traitement de l'échantillon de chaque cellule de travail (30, 31, 32, 33, 34, 40) de sorte que chaque cellule de travail continue à fonctionner au débit maximum respectif tant que les tubes d'échantillons attribués à la cellule de travail (30, 31, 32, 33, 34, 40) respective sont disponibles dans le module de routage d'échantillons (50).

9. Procédé de traitement de tubes d'échantillons (10), le procédé comprenant
- l'attribution de tubes d'échantillons (10) chargés dans un système (100) comprenant un transporteur (20), une pluralité de cellules de travail (30, 31, 32, 33, 34, 40) pour traiter les tubes d'échantillons (10) et un module de routage d'échantillons (50) accouplé de manière modulaire au transporteur (20), à au moins une de la pluralité de cellules de travail (30, 31, 32, 33, 34, 40), les cellules de travail (30, 31, 32, 33, 34, 40) ayant des débits de traitement d'échantillons respectifs, dans lequel au moins une des cellules de travail (40) est un module d'archivage pour stocker les tubes d'échantillons traités par d'autres cellules de travail (30, 31, 32, 33, 34) ou un module de déchargement (80) pour décharger les tubes d'échantillons du système (100),
- l'envoi des tubes d'échantillons (10) chargés dans le système (100) au module de routage d'échantillons (50) et du module de routage d'échantillons (50) aux cellules de travail (30, 31, 32, 33, 34, 40) par l'intermédiaire du transporteur (20) avec une fréquence pour chaque cellule de travail (30, 31, 32, 33, 34, 40), qui est égale au débit de traitement d'échantillons de chaque cellule de travail (30, 31, 32, 33, 34, 40) respective
- l'envoi des tubes d'échantillons traités (10) des cellules de travail (30, 31, 32, 33, 34) au module de routage d'échantillons (50) pendant au moins une première durée prédéfinie, pendant laquelle un traitement supplémentaire par la même cellule de travail ou par une cellule de travail (30, 31, 32, 33, 34) différente peut être requis, et
- l'envoi des tubes d'échantillons (10) traités du module de routage d'échantillons (50) au module d'archivage (40) ou au module de déchargement (80) après ladite première durée prédéfinie.

10. Procédé selon la revendication 9 comprenant l'envoi de tous les tubes d'échantillons (10) chargés dans le système (100) au module de routage d'échantillons (50).

11. Procédé selon la revendication 9 comprenant l'envoi des tubes d'échantillons (10) chargés dans le système (100) directement à au moins une de la pluralité de cellules de travail (30, 31, 32, 33, 34, 40) et le contournement du module de routage d'échantillons (50) si la fréquence à laquelle ladite cellule de travail (30, 31, 32, 33, 34, 40) est desservie est inférieure à son débit de traitement d'échantillons et l'envoi des tubes d'échantillons (10) au module de routage d'échantillons et du module de routage d'échantillons à ladite cellule de travail si la fréquence à laquelle ladite cellule de travail (30, 31, 32, 33, 34, 40) est desservie est supérieure ou égale à son débit de traitement d'échantillons.
